Europäisches Patentamt

European Patent Office

Office européen des brevets

(11) Veröffentlichungsnummer: **0 479 045 A2**

## EUROPÄISCHE PATENTANMELDUNG

(21) Anmeldenummer: **91115836.8**

(22) Anmeldetag: **18.09.91**

(51) Int. Cl.5: **F16P 3/12, H02P 7/00**

(30) Priorität: **04.10.90 DE 4031257**

(43) Veröffentlichungstag der Anmeldung:
**08.04.92 Patentblatt 92/15**

(84) Benannte Vertragsstaaten:
**DE ES FR GB IT**

(71) Anmelder: **ROBERT BOSCH GMBH**
**Postfach 30 02 20**
**W-7000 Stuttgart 30(DE)**

(72) Erfinder: **Lamm, Hubert, Dipl.-Ing.**
**Schlossbergstrasse 13**
**W-7594 Kappelrodeck(DE)**
Erfinder: **Kiefer, Stefan, Dipl.-Ing.**
**Käferbergweg 9**
**W-7601 Ortenberg(DE)**

(54) **Vorrichtung zum Betreiben von elektromotorisch angetriebenen Teilen.**

(57) Es wird eine Vorrichtung zum Betreiben von elektromotorisch angetriebenen Teilen (15) vorgeschlagen, bei denen die Gefahr des Einklemmens von Gegenständen oder Körperteilen von Personen besteht. Eine signalverarbeitende Anordnung (11) wertet die Drehzahl (n) des Elektromotors (10) oder eines Antriebs (14) aus. Die Drehzahl ist eine Kenngröße, die einen Bezug zur Betätigungskraft des Teils (15) aufweist, der durch den funktionalen Zusammenhang (40, 41) zwischen Drehzahl (n) und Drehmoment (M) des Elektromotors (10) oder des Antriebs (14) gegeben ist. Zur Korrektur des Temperatureinflusses auf die Kennlinien (40, 41) ist ein Temperatursensor (19) vorgesehen, der eine am Elektromotor (10) auftretende Temperatur, vorzugsweise die Wicklungstemperatur, erfaßt und zur signalverarbeitenden Anordnung (11) weiterleitet. Ferner kann ein Einfluß einer veränderlichen Betriebsspannung (U) auf die Kenngröße berücksichtigt werden.

FIG. 3

EP 0 479 045 A2

## Stand der Technik

Die Erfindung geht aus von einer Vorrichtung zum Betreiben von elektromotorisch angetriebenen Teilen, bei denen die Gefahr des Einklemmens von Gegenständen oder Körperteilen von Personen besteht, nach der Gattung des Hauptanspruchs. In der Patentanmeldung DE-P 40 00 730.8 ist eine gattungsgemäße Vorrichtung beschrieben, bei der zunächst die Erfassung einer Kenngröße, die einen Bezug zur Betätigungskraft des Teils aufweist, sowie eine Ermittlung des von dem Teil zurückgelegten Weges vorgesehen sind. Berechnet wird anschließend eine Ableitung des Verlaufs der Kenngröße nach dem Weg. Eine Überschreitung eines Grenzwertes, der für das Ergebnis der Ableitung vorgegeben ist, führt zur Abschaltung des Antriebs und/oder zur Umkehr der Bewegungsrichtung. Als Antrieb ist ein Elektromotor vorgesehen, bei dem der funktionale Zusammenhang zwischen Drehzahl und Drehmoment durch die Konstruktion des Elektromotors festgelegt ist. Die Erfassung der Drehzahl des Elektromotors oder einer anderen Drehzahl im Antrieb kann daher als Kenngröße, die einen Bezug zur Betätigungskraft des Teils aufweist, herangezogen werden, da aus dem Drehmoment die Betätigungskraft ableitbar ist.

Der Erfindung liegt die Aufgabe zugrunde, eine Vorrichtung zum Betreiben von elektromotorisch angetriebenen Teilen zu verbessern, bei denen die Gefahr des Einklemmens von Gegenständen oder Körperteile von Personen besteht.

Die Aufgabe wird durch die im Hauptanspruch angegebenen Merkmale gelöst.

## Vorteile der Erfindung

Der Erfindung liegt die Erkenntnis zugrunde, daß der Einfluß der Temperatur des Elektromotors auf das von ihm abgegebene Drehmoment in der vorgesehenen Anwendung nicht zu vernachlässigen ist. Die gesetzlich vorgegebenen Grenzen der Einklemmkräfte müssen aber über den gesamten Temperaturbereich von etwa -30 C° bis +90 C° eingehalten werden. Eine erfindungsgemäß vorgesehene signalverarbeitende Anordnung ermittelt eine Kenngröße, die einen Bezug zur Betätigungskraft des Teils aufweist. Verarbeitet wird ferner eine am Elektromotor auftretende Temperatur, die von wenigstens einem Temperatursensor erfaßt wird. Der Einfluß der Temperatur auf ein Abschaltkriterium kann somit von der signalverarbeitenden Anordnung berücksichtigt werden.

Vorteilhafte Weiterbildungen und Verbesserungen der erfindungsgemäßen Vorrichtung ergeben sich aus Unteransprüchen.

Als Kenngröße ist in besonderem Maße die Drehzahl des Elektromotors oder des Antriebs geeignet, da die Betätigungskraft des Teils aus dem funktionalen Zusammenhang zwischen Drehzahl des Elektromotors und das von ihm abgegebene Drehmoment ableitbar ist. Der funktionale Zusammenhang ist im Idealfall durch eine Gerade mit einer bestimmten Steigung gegeben. Die signalverarbeitende Anordnung berücksichtigt eine Änderung dieser Steigung, die von der Temperatur in erheblichem Maße abhängt.

In einer Weiterbildung ist zusätzlich der Einfluß der Betriebsspannung des Elektromotors auf den funktionalen Zusammenhang zwischen Drehzahl und Drehmoment berücksichtigt.

Eine vorteilhafte Ausgestaltung der erfindungsgemäßen Vorrichtung sieht die Erfassung der Temperatur einer stromdurchflossenen Wicklung des Elektromotors vor. Entscheidend für den Einfluß der Temperatur auf den funktionalen Zusammenhang ist der ohmsche Widerstand der Wicklung, der von der tatsächlichen Wicklungstemperatur abhängt.

## Zeichnung

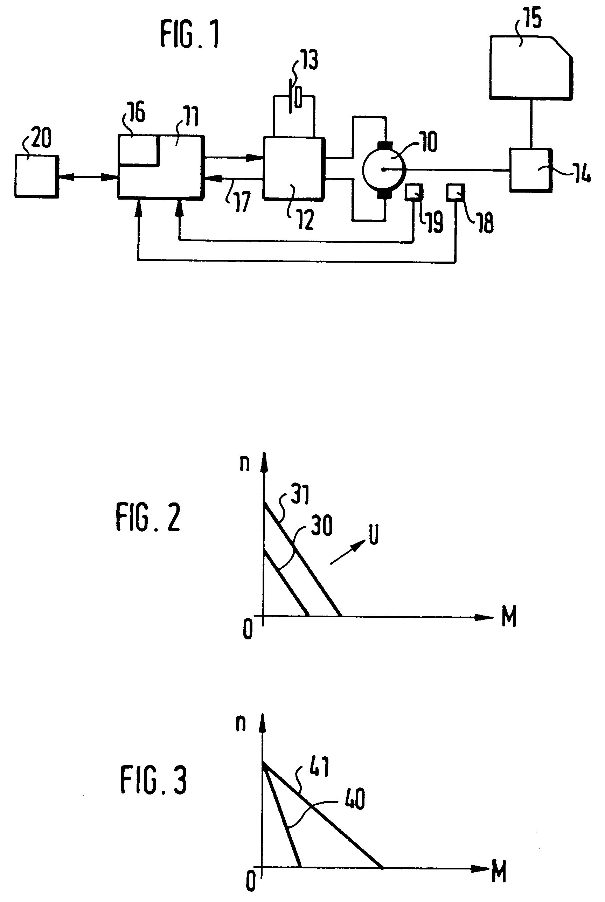

Figur 1 zeigt ein Blockschaltbild eines Antriebs, Figur 2 einen funktionalen Zusammenhang zwischen Drehzahl und Drehmoment eines Elektromotors in Abhängigkeit von der Betriebsspannung und Figur 3 zeigt einen funktionalen Zusammenhang zwischen der Drehzahl und dem Drehmoment eines Elektromotors in Abhängigkeit von einer am Motor auftretenden Temperatur.

Figur 1 zeigt einen Elektromotor 10, der von einer signalverarbeitenden Anordnung 11 über eine Motortreiberschaltung 12 angesteuert wird. Zur Versorgung des Elektromotors 10 mit elektrischer Energie ist die an der Motortreiberschaltung 12 angeschlossene Energiequelle 13 vorgesehen. Der Elektromotor 12 betätigt über einen Antrieb 14 ein Teil 15, bei dem die Gefahr des Einklemmens von Gegenständen oder Körperteilen von Personen besteht.

Die signalverarbeitende Anordnung 11, die einen Speicher 16 enthält, erhält über eine Verbindung 17 von der Motortreiberschaltung 12 eine Information über die am Elektromotor 10 liegende Betriebsspannung, das von einem Drehzahlsensor 18 abgegebene Signal, das die Drehzahl des Elektromotors 10 oder des Antriebs 14 wiedergibt, das von einem Temperatursensor 19 abgegebene Signal, das zum Erfassen einer am Elektromotor 10 auftretenden Temperatur vorgesehen ist, und das von einer Bedienvorrichtung 20 abgegebene Signal jeweils zugeführt.

Im Speicher 16 der signalverarbeitenden Anordnung 11 ist ein in Figur 2 gezeigter funktionaler Zusammenhang zwischen Drehzahl n und Drehmoment M des Elektromotors 10 oder des Antriebs 14 in Abhängigkeit von der am Elektromotor 10 liegenden Betriebsspannung U abgelegt. Eingezeichnet sind zwei Kennlinien 30, 31, die für unterschiedliche Spannungen U gelten. Die Kennlinie 31 gilt für eine größere Spannung U als die Kennlinie 30.

Im Speicher 16 der signalverarbeitenden Anordnung 11 ist ferner der in Figur 3 gezeigte funktionale Zusammenhang zwischen der Drehzahl n und dem Drehmoment M des Elektromotors 10 oder des Antriebs 14 in Abhängigkeit von der am Elektromotor 10 auftretenden Temperatur abgelegt, wobei die Betriebsspannung konstant ist. Die Kennlinie 40 gilt für eine höhere Temperatur als die Kennlinie 41.

Die erfindungsgemäße Vorrichtung wird anhand des in Figur 1 gezeigten Blockschaltbilds in Verbindung mit den in den Figuren 2 und 3 gezeigten Kennlinien näher erläutert:
Über die Bedienvorrichtung 20 kann an die signalverarbeitende Anordnung 11 eine Eingabe zur Bewegung des Teils 15 abgegeben werden. Die signalverarbeitende Anordnung 11 gibt Ansteuersignale an die Motortreiberschaltung 12 ab, die zumindest einen elektronischen Schalter zum Einschalten des Elektromotors 10 in beide Drehrichtungen enthält. Die benötigte Energie wird aus der Energiequelle 13 bezogen, die in Figur 1 mit einem Batteriesymbol eingetragen ist. Der Elektromotor 10 betätigt über den Antrieb 14 das zu bewegende Teil 15.

Als Teil 15 sind beispielsweise Schiebetüren oder andere stationäre fremdkraftbetätigte Teile vorgesehen. Insbesondere eignet sich die erfindungsgemäße Vorrichtung zum Betreiben von Schiebedächern, Fensterhebern, Türschließhilfen und Gurtbringern bei Kraftfahrzeugen. In der Montagetechnik ist die erfindungsgemäße Vorrichtung besonders vorteilhaft bei fremdkraftbetätigten Handhabungsmaschinen einzusetzen. Ferner ist sie besonders geeignet zum Betreiben von Rolläden sowie Schranken oder beispielsweise Parkplatzreservierungsvorrichtungen. Bei allen diesen Teilen besteht die Gefahr des Einklemmens von Gegenständen oder Körperteilen von Personen, wobei die Einklemmkraft ein bestimmtes Maß nicht überschreiten sollt und gegebenenfalls ein Öffnungsvorgang infolge eines Einklemmens vorzunehmen ist.

Das in der nicht vorveröffentlichen Patentanmeldung DE-P 40 00 730.8 beschriebene Verfahren sieht die Erfassung einer Kenngröße, die einen Bezug zur Betätigungskraft des Teils 15 aufweist, und eine anschließende Ermittlung des von dem Teil 15 zurückgelegten Weges vor. Aus der Berechnung wenigstens einer Ableitung des Verlaufs der Kenngröße nach dem zurückgelegten Weg und dem anschließenden Vergleich des Ergebnisses der Ableitung mit einem vorgegebenen Grenzwert wird eine Abschaltung oder eine Umkehrung der Bewegungsrichtung veranlaßt. Dieses Verfahren kann auch hier vorgesehen sein. Die signalverarbeitende Anordnung 11 korrigiert den Grenzwert in Abhängigkeit von der von dem Temperatursensor 19 erfaßten Temperatur des Elektromotors 10. Der Temperatureinfluß auf die Betätigungskraft ist somit eliminiert.

Als Kenngröße eignet sich in besonderem Maße die Drehzahl des Elektromotors 10 oder eine andere Drehzahl, die beispielsweise im Antrieb 14 auftritt, die von dem Drehzahlsensor 18 erfaßt wird. In einer anderen Ausführung ist der Drehzahlsensor 18 selbst gar nicht erforderlich. Es sind Verfahren bekannt geworden, die, beispielsweise bei getaktetem Betrieb des Elektromotors, eine Ableitung des Drehzahlsignals aus den am Motor 10 erfaßbaren elektrischen Kenngrößen ermöglichen. Wesentlich ist es, daß Mittel vorgesehen sind, die es der signalverarbeitenden Anordnung 11 ermöglichen, ein Maß für die Betätigungskraft zu ermitteln. Bei bekannter Drehzahl läßt sich die Betätigungskraft aus dem funktionalen Zusammenhang zwischen Drehzahl n des Elektromotors 10 und dem abgegebenen Drehmoment M ermitteln.

Der funktionale Zusammenhang zwischen der Drehzahl n und dem Drehmoment M bei konstanter Betriebsspannung U des Elektromotors 10 ist in Figur 3 gezeigt. Im Idealfall ergeben sich Geraden 40, 41, deren Steigung von der Temperatur des Motors 10 abhängt. Die Kennlinie 40 gilt für eine höhere Temperatur als die Kennlinie 41. Daraus folgt, daß das vom Elektromotor 10 abgegebene Drehmoment unter der Voraussetzung gleicher Drehzahlen n bei hohen Temperaturen niedriger ist als bei niedrigeren Temperaturen.

Eine unterschiedliche Betriebstemperatur des Elektromotors ergibt sich einerseits durch die Umgebungstemperatur. Ferner hat die während des Betriebs des Elektromotors auftretende Verlustleistung einen erheblichen Einfluß auf die Temperatur. Die Verlustleistung tritt durch den ohmschen Widerstand einer Wicklung des Elektromotors 10 auf.

In Abhängigkeit von der vom Temperatursensor 19 erfaßten Temperatur korrigiert die signalverarbeitende Anordnung aus dem in Figur 3 gezeigten funktionalen Zusammenhang abgeleiteten Grenzwert zum Abschalten oder zur Umkehr der Bewegungsrichtung des Antriebs 14.

In einer vorteilhaften Weiterbildung wird zusätzlich eine unterschiedliche Betriebsspannung U des Elektromotors 10 bei der Vorgabe des Grenzwerts berücksichtigt. Der Einfluß unterschiedlicher Betriebsspannungen U auf dem funktionalen Zusammenhang zwischen Drehzahl n und Drehmoment M des Elektromotors 10 bei konstanter Motortemperatur ist aus den beiden in Figur 2 gezeigten Kennlinien 30, 31 ersichtlich. Eine steigende Betriebsspannung U wirkt sich nur auf den Achsenabschnitt auf der Drehzahlachse n aus. Die Steigung der Kennlinie 30, 31 wird nicht beeinflußt. Eine steigende Betriebsspannung U hat bei konstanter Drehzahl ein ansteigendes Drehmoment zur Folge. Die neben der Motortemperatur zusätzlich berücksichtigte Betriebsspannung U des Elektromotors 10 trägt weiter zur Verbesserung der erfindungsgemäßen Vorrichtung bei.

Der zur Temperaturerfassung vorgesehene Sensor 19 ist an einer geeigneten Stelle am Elektromotor 10 anzubringen. Wesentlich ist die Wicklungstemperatur einer vom hauptsächlichen Betriebsstrom des Motors 10 durchflossenen Wicklung, deren Temperatur vorzugsweise zu erfassen ist. In einer weiteren Ausgestaltung können auch mehrere Temperatursensoren vorgesehen sein, sofern dies durch eine ungleichmäßige Erwärmung des Motors oder dessen Wicklung erforderlich sein sollte.

**Patentansprüche**

1.  Vorrichtung zum Betreiben von elektromotorisch angetriebenen Teilen, bei denen die Gefahr des Einklemmens von Gegenständen oder Körperteilen von Personen besteht, dadurch gekennzeichnet, daß Mittel (18) zum Herleiten einer Kenngröße vorgesehen sind, die einen Bezug zur Betätigungskraft des Teils (15) aufweist, daß eine signalverarbeitende Anordnung (11) aus der Kenngröße ein Kriterium zum Abschalten oder zur Umkehr der Drehrichtung eines Elektromotors (10) ermittelt, daß wenigstens ein Temperatursensor (19) zum Erfassen einer am Elektromotor (10) auftretende Temperatur vorgesehen ist und daß die signalverarbeitende Anordnung (11) in Abhängigkeit von der erfaßten Temperatur die Kenngröße beeinflußt.

2.  Vorrichtung nach Anspruch 1, dadurch gekennzeichnet, daß als Kenngröße, die einen Bezug zur Betätigungskraft des Teils (15) aufweist, die Drehzahl (n) des Elektromotors (10) vorgesehen ist, wobei die Betätigungskraft des Teils (15) aus einem in einem Speicher (16) der signalverarbeitenden Anordnung (11) hinterlegten funktionalen Zusammenhang (40, 41) zwischen der Drehzahl (n) und dem Drehmoment (M) des Elektromotors (10) hergeleitet ist.

3.  Vorrichtung nach Anspruch 1 oder 2, dadurch gekennzeichnet, daß der Einfluß einer veränderlichen Betriebsspannung (U) des Elektromotors (10) auf die Kenngröße in der signalverarbeitenden Anordnung (11) berücksichtigt wird.

4.  Vorrichtung nach einem der vorhergehenden Ansprüche, dadurch gekennzeichnet, daß der Temperatursensor (19) an einer Wicklung des Elektromotors (10) angeordnet ist.

FIG. 1

FIG. 2

FIG. 3